# EUROPÄISCHE PATENTSCHRIFT

(11) **EP 2 605 445 B1**
(45) Veröffentlichungstag und Bekanntmachung des Hinweises auf die Patenterteilung: **30.09.2015**
(21) Anmeldenummer: 12187458.0
(22) Anmeldetag: 05.10.2012
(51) Int. Cl.: G09C 1/00, H04L 9/14

(54) **Verfahren und Vorrichtung zur Absicherung von Blockchiffren gegen Template-Attacken**
Method and apparatus for securing block ciphers against template attacks
Procédé et dispositif de sécurisation de chiffrement par blocs contre les attaques par templates

(30) Priorität: 14.12.2011 DE 102011088502
(43) Veröffentlichungstag der Anmeldung: 19.06.2013
(73) Patentinhaber: Siemens Aktiengesellschaft, 80333 München (DE)
(72) Erfinder: Hess, Erwin, 85521 Ottobrunn (DE)

(56) Entgegenhaltungen:
- WO-A1-00/41356
- WO-A1-00/77596
- US-A1- 2004 193 898

## Beschreibung

Die vorliegende Erfindung betrifft die Absicherung von Blockchiffren gegen Template-Attacken.

Eine Blockchiffre ist ein symmetrisches Verschlüsselungsverfahren, bei dem der zu verschlüsselnde Klartext in eine Folge von Blöcken gleicher Länge zerlegt wird, beispielsweise der Länge 64 Bit oder 128 Bit. Jeder Klartextblock wird auf einen Chiffreblock derselben Länge abgebildet. Typische Beispiele für Blockchiffren sind der DES-Algorithmus (DES, Data Encryption Standard) mit einer Blockbreite von 64 Bit und der AES-Algorithmus (AES, Advanced Encryption Standard) mit einer Blockbreite von 128 Bit. Blockchiffren werden herkömmlicherweise eingesetzt, wenn eine große Datenmenge zu verschlüsseln ist.

Implementierungen von Blockchiffren werden typischerweise mitunter mittels Template-Attacken angegriffen.

Template-Attacken gehören zur Klasse der Seitenkanal-Angriffe. Dies sind Angriffe gegen konkrete Implementierungen kryptographischer Verfahren, die physikalische Seiteneffekte der kryptographischen Abläufe ausnutzen. Beispiele für solche physikalischen Seiteneffekte sind die benötigte Rechenzeit, das sich ergebende Stromprofil und die elektromagnetische Abstrahlung. Bei den Template-Attacken handelt sich daher aber nicht um Angriffe gegen das kryptographische Verfahren an sich.

Bei einer Template-Attacke geht man davon aus, dass der Angreifer vollen Zugriff auf eine Trainings-Implementierung des kryptographischen Verfahrens hat, die in Hard- und Software zu der eigentlichen Zielimplementierung baugleich ist, die angegriffen werden soll. Lediglich der oder die Schlüssel des kryptographischen Verfahrens, dessen Implementierung angegriffen werden soll, stehen auf der Trainings-Implementierung nicht zur Verfügung. Eine Gemeinsamkeit aller Template-Attacken besteht darin, zu einer Anzahl von Eingabedaten aus Klartexten und selbst gewählten Schlüsseln den Verlauf der Stromverbrauchskurve aufzuzeichnen und anschließend ein Modell zu entwickeln, das möglichst gut die Abhängigkeit des Stromverbrauchs von den Eingabedaten beschreibt. Dies kann als Lernphase bezeichnet werden.

Nach dieser Lernphase mit der Trainings-Implementierung wird dann in einer darauf folgenden Messphase das Stromprofil der eigentlichen Zielplattform, das von einem unbekannten geheimen Schlüssel abhängt, aufgezeichnet. Mit Hilfe des vorher erstellten Modells über den Zusammenhang zwischen Eingabedaten und Stromprofil wird dann versucht, den a priori unbekannten Schlüssel zu ermitteln. Im Idealfall gelingt dies mit einer einzigen Messung.

Es ist offensichtlich, dass die spezielle Situation, die dem Angriffs-Szenario einer Template-Attacke zu Grunde liegt, nicht immer gegeben ist. So kann etwa durch logistische Mittel verhindert werden, dass Plattformen mit wechselbaren Schlüsseln überhaupt in Umlauf kommen. Ferner kann man den Schlüsselspeicher einer potentiellen Trainings-Plattform elektronisch verriegeln, so dass es praktisch unmöglich wird, die erforderlichen Messdaten mit selbst gewählten Eingabedaten überhaupt aufzunehmen.

Wenn aber die Möglichkeit einer Template-Attacke gegeben ist, sind Template-Attacken die leistungsfähigsten Seitenkanalangriffe überhaupt.

Die herkömmlichen technischen Gegenmaßnahmen gegen Template-Attacken sind zunächst dieselben, die auch gegen DPA-Attacken (DPA, Differential Power Analysis) einsetzt werden können. Beispielsweise durch eine elektrische Glättung der Implementierung, zum Beispiel durch Dual-Rail-Logik, kann die individuelle Abhängigkeit des Stromverbrauchs von den Eingabedaten verringert werden. Ferner kann der kryptographische Algorithmus in seinem Ablauf randomisiert werden, beispielsweise durch Verwendung von zufälligen Masken oder durch Einführung so genannter "Random Wait States" in den Verfahrensablauf. Weiter können die verwendeten Schlüssel ausreichend häufig gewechselt werden.

US 2004/0193898 A1 offenbart eine Verschlüsselungsverarbeitungsvorrichtung und ein entsprechendes Verfahren. Hierbei wird eine ursprüngliche Verschlüsselungsverarbeitungssequenz in eine Mehrzahl von Gruppen geteilt. Die Verarbeitungssequenz wird durch Setzen von Dummies gemischt.

Es gibt jedoch Implementierungs-Situationen in denen durch externe Vorgaben, zum Beispiel durch Standards, ein Schlüsselwechsel nicht möglich ist.

Es ist daher eine Aufgabe der vorliegenden Erfindung, eine Blockchiffre, bei welcher ein fester Schlüssel verwendet wird, gegen Template-Attacken zu schützen.

Demgemäß wird ein Verfahren zum Absichern einer mit einem Nutzschlüssel K₀ verschlüsselten Blockchiffre F gegen Template-Attacken vorgeschlagen. Dabei werden eine durch die Blockchiffre F und den Nutzschlüssel K₀ festgelegte Nutz-Permutation F(K₀) und eine Anzahl N von Dummy-Permutationen G(K₁),..., G(Kₙ) bereitgestellt. Die N Dummy-Permutationen G(K₁),..., G(Kₙ) sind durch N Dummy-Schlüssel K₁,...,Kₙ und die Blockchiffre F oder die Inverse F⁻¹ der Blockchiffre F festgelegt. Die Nutz-Permutation F(K₀) und die N Dummy-Permutationen G(K₁),..., (G (Kₙ) werden derart zu einer Verkettung H verkettet, dass die Verkettung H und die Nutz-Permutation F(K₀) eine gleiche Abbildung ergeben (H = F(K₀)).

Folglich wird die durch die Blockchiffre F und den Schlüssel K₀ festgelegte Permutation F(K₀) derart zu einem Produkt H = G(K₁)o G(K₂) ... o G(Kₘ)o F(K₀) o G(_{Km+1}) o G(_{Km+2}) o ... o G(Kₙ) von Permutationen verkettet, dass stets H = F(K₀) gilt. Damit kann die Nutz-Permutation F(K₀) vorteilhafterweise in der Verkettung H versteckt werden, so dass die Wahrscheinlichkeit einer erfolgreichen Template-Attacke reduziert wird.

Die verwendeten Schlüssel K₁,...,Kₘ und Kₘ₊₁,...,Kₙ werden vorzugsweise vor jeder Anwendung von F neu gebildet oder zumindest permutiert. Die Blockchiffre G wird hierbei als G = F oder G = F⁻¹ gewählt.

Es wird ausgenutzt, dass die Urbildmenge M einer Blockchiffre identisch ist mit der Bildmenge und dass nach Wahl eines Schlüssels die Blockchiffre eine Permutation auf M realisiert. Die Gesamtheit der Permutationen einer Menge M bildet eine Gruppe bezüglich der Verkettung "o" von Abbildungen. Somit können die Permutationen von M in beliebiger Weise miteinander verkettet werden. Das Resultat der Verkettung ist stets wieder eine Permutation von M. Sind f₁ und f₂ zwei beliebige Permutationen von M, so ist die Wirkung der verketteten Permutation f₁ o f₂ definiert durch f₁ o f₂(m) = f₁(f₂(m)), wenn m ein beliebiges Element von M bezeichnet. Das Bild von m unter der Permutation f₂ ist also das Urbild für die Permutation f₁.

Bei einer Ausführungsform wird die Anzahl N der Dummy-Permutationen G(K₁),...,G(Kₙ) derart bereitgestellt, dass eine Verkettung der N Dummy-Permutationen G(K₁),...,G(Kₙ) eine Urbildmenge M der Blockchiffre F ergibt.

Die Permutationen G(K₁),...,G(Kₙ) werden insbesondere so gewählt, dass G(K₁)o G(K₂) o ... o G(Kₙ) die identische Abbildung id_{M} auf M ist. Entsprechend werden auch die Permutationen G(Kₘ₊₁),...,G(Kₙ) so gewählt, dass G(Kₘ₊₁)o G(Kₘ₊₂)o ... o G(Kₙ) = id_{M} gilt.

Insgesamt gilt also H = G(K₁)o G(K₂)o ... o G(Kₘ)o F(K₀) o G(Kₘ₊₁)o G(Kₘ₊₂)o ... o G(Kₙ)=(G(K₁)o G(K₂)o ... o G(Kₘ))o F(K₀) o(G(_{Km+1})o G(Kₘ₊₂)o ... o G(Kₙ))=id_{M} o F(K₀)o id_{M} = F(K₀).

Damit realisieren G(K₁)o G(K₂)o ... o G(Kₘ)sowie G(Kₘ₊₁)o G(K₂)o ... o G(Kₙ) redundante Darstellungen der identischen Abbildung id_{M}.

Die folgenden Methoden zeigen, wie auf einfache Weise diese redundanten Darstellungen der identischen Abbildung gewonnen werden können. Zur Vereinfachung der Notation wird gᵢ:= G(Kᵢ) verwendet.
Methode 1: id = G(K₁) o G(K₂)o ... o G(Kₘ) ist von der Bauform (g₁ o g₁⁻¹) o (g₂ o g₂⁻¹) o ... o (gm o gₘ⁻¹)
Methode 2: id = G(K₁) o G(K₂) o ... o G(Kₘ) ist von der Bauform (g₁ o g₂ o ... o gₘ) o (gₘ⁻¹ o ... o g₂⁻¹ o g₁⁻¹)
Methode 3: id= G(K₁) o G(K₂) o ... o G(Kₘ) ist von der Bauform (9₁ o g₂ o g₃⁻¹) o (g₃ o g₂⁻¹ o g₁⁻¹) o (g₄ o g₅ o g₆⁻¹) o (g₆ o g₅⁻¹ o g₄¹) o ...

Ferner sind beliebige Mischformen der drei genannten Methoden möglich. Ebenso besitzt die beschriebene Vorgehensweise auch für die Permutation G(Kₘ₊₁) o G(K₂) o ... o G(Kₙ) Gültigkeit.

Die Methode 3 ist besonders dann geeignet, wenn man Implementierungen des Triple-DES-Algorithmus absichern will.

Erfindungsgemäß wird die grundsätzlich immer vorhandene Möglichkeit, Blockchiffren zu iterieren, dazu verwendet, eine Implementierung einer Blockchiffre gegen Template-Attacken abzusichern.

Herkömmlicherweise wurde die Iteration von Blockchiffren nur dazu verwendet, den Schlüsselraum eines Algorithmus zu erhöhen. Bekanntes Beispiel für diesen Ansatz ist der Triple-DES, der - in der obigen Notation - nach Wahl von drei Schlüsseln eine Permutation der Bauform g₁ o g₂ o g₃⁻¹ bewirkt.

Typischerweise sind Blockchiffren so aufgebaut, dass eine Rundenfunktion mehrfach iteriert wird. In jeder Runde wird ein neuer Partialschlüssel verwendet, der nach einem vorgegebenen Schema, dem so genannten Key Scheduling, aus dem gewählten Schlüssel abgeleitet wird. In der Regel unterscheidet sich die von einer Blockchiffre F nach Wahl eines Schlüssels K gebildete Permutation f - also f = F(K) - von der zugehörigen inversen Permutation f⁻¹ nur durch ein anderes Key Scheduling. Folglich kann f⁻¹ ebenfalls durch die Blockchiffre F realisiert werden.

Dabei ergibt sich eine sehr einfach zu implementierende Methode, um Blockchiffren, die mit einem festen Schlüssel betrieben werden, gegen Template-Attacken abzusichern. Die eigentliche Implementierung der Blockchiffre kann unverändert bleiben, lediglich der Schleifenzähler, der die Anzahl der Iterationen - der Rundenfunktion - steuert, wird hochgesetzt.

Das Key Scheduling wird so modifiziert, dass es eine wie oben beschriebene Folge von Permutationen realisiert, siehe Methode 1 bis Methode 3.

Bei einer weiteren Ausführungsform wird die Verkettung der N Dummy-Permutationen G(K₁),...,G(Kₙ) durch eine erste Bauform mit (g₁ o g₁⁻¹) o (g₂ o g₂⁻¹) o ... o (gₙ o gₙ⁻¹)realisiert, mit gᵢ = G(Kᵢ), wobei G die Blockchiffre F oder die Inverse F⁻¹ der Blockchiffre F bezeichnet und wobei Kᵢ, mit i ∈ [1, ..., n], die N Dummy-Schlüssel K₁,...,Kₙ bezeichnen.

Bei einer weiteren Ausführungsform wird die Verkettung der N Dummy-Permutationen G(K₁),..., G(Kₙ) durch eine zweite Bauform mit (g₁ o g₂ o ... o gₙ) o (gₙ⁻¹ o ... o g₂⁻¹ o g₁⁻¹) realisiert, mit gᵢ = G(Kᵢ), wobei G die Blockchiffre F oder die Inverse F⁻¹ der Blockchiffre F bezeichnet und wobei Kᵢ, mit i ∈ [1, ..., n], die N Dummy-Schlüssel K₁,...,Kₙ bezeichnen.

Bei einer weiteren Ausführungsform wird die Verkettung der N Dummy-Permutationen durch eine dritte Bauform mit (g₁ o g₂ og₃⁻¹) o (g₃ o g₂⁻¹ o g₁⁻¹) o (g₄ o g₅ o g₆⁻¹) o (g₆ o g₅⁻¹ o g₄⁻¹) o ... realisiert, mit gᵢ = G(Kᵢ), wobei G die Blockchiffre F oder die Inverse F⁻¹ der Blockchiffre F bezeichnet und wobei Kᵢ, mit i ∈ [1, ..., n], die N Dummy-Schlüssel K₁,...,Kₙ bezeichnen. Bei einer weiteren Ausführungsform wird eine Implementierung einer Triple-DES-Verschlüsselung mittels der dritten Bauform abgesichert.

Bei einer weiteren Ausführungsform werden die N Dummy-Schlüssel K₁,...,Kₙ vor einem jeden Anwenden der Absicherung permutiert.

Bei einer weiteren Ausführungsform werden die N Dummy-Schlüssel K₁,...,Kₙ vor einem jeden Anwenden der Absicherung neu gebildet.

Bei einer weiteren Ausführungsform wird der Nutzschlüssel K₀ der Blockchiffre F fest zugeordnet.

Weiterhin wird ein Computerprogrammprodukt vorgeschlagen, welches auf einer programmgesteuerten Einrichtung die Durchführung des wie oben erläuterten Verfahrens zum Absichern einer mit einem Nutzschlüssel K₀ verschlüsselten Blockchiffre F gegen Template-Attacken veranlasst.

Ein Computerprogrammprodukt wie ein Computerprogramm-Mittel kann beispielsweise als Speichermedium, wie Speicherkarte, USB-Stick, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Ferner wird eine Vorrichtung zum Absichern einer mit einem Nutzschlüssel K₀ verschlüsselnden oder arbeitenden Blockchiffre F gegen Template-Attacken vorgeschlagen, welche ein erstes Mittel, ein zweites Mittel und ein drittes Mittel aufweist. Das erste Mittel ist zum Bereitstellen einer durch die Blockchiffre F und den Nutzschlüssel K₀ festgelegten Nutz-Permutation F(K₀) eingerichtet. Das zweite Mittel ist zum Bereitstellen einer Anzahl N von Dummy-Permutationen G(K₁),...,G(Kₙ) eingerichtet. Die N Dummy-Permutationen G(K₁),...,G(Kₙ) sind durch N Dummy-Schlüssel K₁,...,Kₙ und die Blockchiffre F oder die Inverse F⁻¹ der Blockchiffre F festgelegt. Das dritte Mittel ist dazu eingerichtet, die Nutz-Permutation F(K₀) und die N Dummy-Permutationen G(K₁),...,G(Kₙ) derart zu einer Verkettung H zu verketten, dass die Verkettung H und die Nutz-Permutation F(K₀) eine gleiche Abbildung ergeben (H = F(K₀)).

Das jeweilige Mittel kann hardwaretechnisch oder auch softwaretechnisch implementiert sein. Bei einer hardwaretechnischen Implementierung kann das jeweilige Mittel als Vorrichtung oder als Teil einer Vorrichtung, zum Beispiel als Computer oder als Microprozessor ausgebildet sein. Bei einer softwaretechnischen Implementierung kann das jeweilige Mittel als Computerprogrammprodukt, als eine Funktion, als eine Routine, als Teil eines Programmcodes oder als ausführbares Objekt ausgebildet sein.

Des Weiteren wird ein Prozessor mit einer vorstehend beschriebenen Vorrichtung zum Absichern einer mit einem Nutzschlüssel K₀ verschlüsselten Blockchiffre F gegen Template-Attacken vorgeschlagen. Die Vorrichtung ist beispielsweise als Teil der CPU (CPU, Control Processing Unit) des Prozessors implementiert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Dabei zeigen:
- Fig. 1: ein Ablaufdiagramm eines Ausführungsbeispiels eines Verfahrens zum Absichern einer Blockchiffre gegen Template-Attacken;
- Fig. 2: ein Blockschaltbild eines Ausführungsbeispiels einer Vorrichtung zum Absichern einer Blockchiffre gegen Template-Attacken; und
- Fig. 3: ein Blockschaltbild eines Ausführungsbeispiels eines Prozessors mit einer Vorrichtung nach der Fig. 2; und
- Fig. 4: ein Blockschaltbild eines weiteren Ausführungsbeispiels einer Vorrichtung zum Absichern einer Blockchiffre gegen Template-Attacken.

In den Figuren sind gleiche oder funktionsgleiche Elemente mit denselben Bezugszeichen versehen worden, sofern nichts anderes angegeben ist.

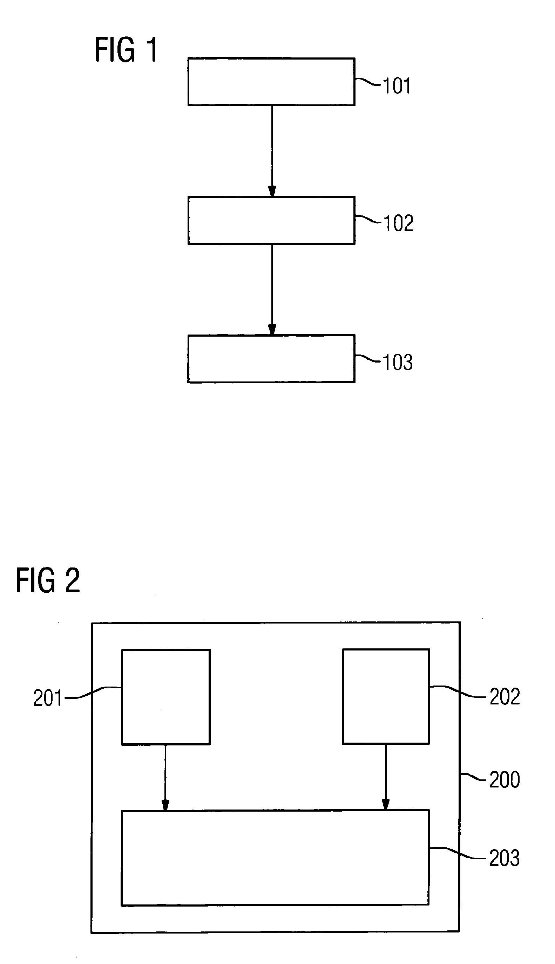

In Fig. 1 ist ein Ablaufdiagramm eines Ausführungsbeispiels eines Verfahrens zum Absichern einer mit einem Nutzschlüssel K₀ verschlüsselnden Blockchiffre F gegen Template-Attacken dargestellt.

In Schritt 101 wird eine durch die Blockchiffre F und den Nutzschlüssel K₀ festgelegte Nutz-Permutation F(K₀) bereitgestellt. Insbesondere ist der Nutzschlüssel K₀ der Blockchiffre F fest zugeordnet.

In Schritt 102 wird eine Anzahl N von Dummy-Permutationen G(K₁),...,G(Kₙ) bereitgestellt. Die N Dummy-Permutationen G(K₁),...,G(Kₙ) sind durch N Dummy-Schlüssel K₁,...,Kₙ und die Blockchiffre F oder die Inverse F⁻¹ der Blockchiffre F festgelegt.

In Schritt 103 werden die Nutz-Permutation F(K₀) und die N Dummy-Permutationen G(K₁),...,G(Kₙ) derart zu einer Verkettung H verkettet, dass die Verkettung H und die Nutz-Permutation F(K₀) eine gleiche Abbildung ergeben (H = F(K₀)).

Vorzugsweise werden die N Dummy-Schlüssel K₁,...,Kₙ vor einem jeden Anwenden der Schritte 101 bis 103 permutiert oder neu gebildet.

Beispielsweise werden die Schritte 101 bis 103 durch ein Computerprogrammprodukt implementiert, welches auf einer programmgesteuerten Einrichtung, beispielsweise auf einem Prozessor, die Durchführung der Schritte 101 bis 103 veranlasst.

Fig. 2 zeigt ein Blockschaltbild eines Ausführungsbeispiels einer Vorrichtung 200 zum Absichern einer mit einem Nutzschlüssel K₀ verschlüsselten Blockchiffre F gegen Template-Attacken.

Die Vorrichtung 200 hat ein erstes Mittel 201, ein zweites Mittel 202 und ein drittes Mittel 203. Das erste Mittel 201 ist zum Bereitstellen einer durch die Blockchiffre F und den Nutzschlüssel K₀ festgelegten Nutz-Permutation F(K₀) eingerichtet. Das zweite Mittel 202 ist zum Bereitstellen einer Anzahl N von Dummy-Permutationen G(K₁),...,G(Kₙ) eingerichtet. Die N Dummy-Permutationen G(K₁),...,G(Kₙ) sind durch N Dummy-Schlüssel K₁,...,Kₙ und die Blockchiffre F oder die Inverse F⁻¹ der Blockchiffre F festgelegt. Das dritte Mittel 203 ist dazu eingerichtet, die Nutz-Permutation F(K₀) und die N Dummy-Permutationen G(K₁),...,G(Kₙ) derart zu einer Verkettung H zu verketten, dass die Verkettung H und die Nutz-Permutation F(K₀) eine gleiche Abbildung ergeben (H= F(K₀)).

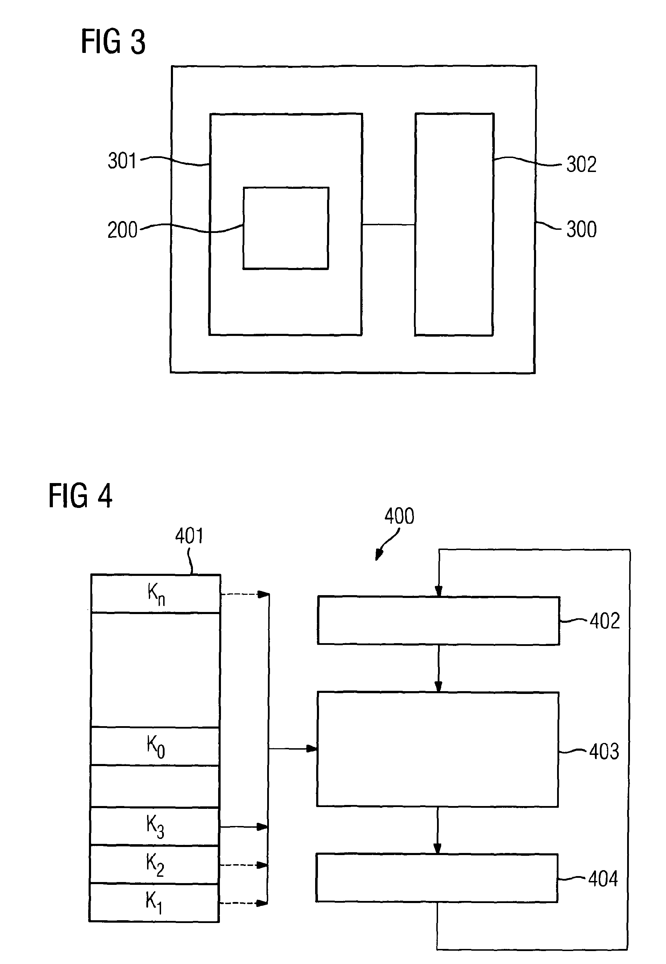

In Fig. 3 ist ein Blockschaltbild eines Ausführungsbeispiels eines Prozessors 300 mit einer Vorrichtung 200 nach der Fig. 2 dargestellt. Die Vorrichtung 200 ist beispielsweise als Teil der CPU 301 des Prozessors 300 implementiert, welche mit einem Speicher 302 gekoppelt ist. In dem Speicher 302 können insbesondere der Nutzschlüssel K₀ und die Dummy-Schlüssel K₁,...,Kₙ gespeichert werden.

In Fig. 4 ist ein Blockschaltbild eines weiteren Ausführungsbeispiels einer Vorrichtung 400 zum Absichern einer Blockchiffre gegen Template-Attacken dargestellt.

Die Vorrichtung 400 der Fig. 4 hat einen Schlüsselspeicher 401 zum Speichern der Schlüssel K1, ..., Kₙ, eine Eingabe 402 für ein Anwendungsmittel 403, das Anwendungsmittel 403 und eine Ausgabe 404 des Anwendungsmittels 403. Die Ausgabe 404 ist auf die Eingabe 402 rückgekoppelt.

Das Anwendungsmittel 403 integriert insbesondere die Funktionen des ersten Mittels 201, des zweiten Mittels 202 und des dritten Mittels 203 der Fig. 2.

Der Schlüsselspeicher 401 stellt die Schlüssel K1, ..., Kₙ in der gewünschten Reihenfolge bereit. Die Verschlüsselung beginnt damit, dass die Eingabe 402 den Klartext m dem Anwendungsmittel 403 bereitstellt und das Anwendungsmittel 403 den Algorithmus G mit dem ersten Schlüssel K1 durchführt. Hierbei wird der Klartext m verschlüsselt zu G(K₁)(m). Dieses erste Chiffrat G(K₁)(m) wird von der Ausgabe 404 zurückgeführt in die Eingabe 402 und damit in das Anwendungsmittel 403. Hier wird dann verschlüsselt mit dem Schlüssel K₂ zu G(K₂)(G)(K₁)(m). Entsprechend wird die Verschlüsselung durchgeführt bis der letzte Schlüssel Kₙ verwendet ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Absichern einer mit einem Nutzschlüssel (K₀) verschlüsselten Blockchiffre (F) gegen Template-Attacken, mit den Schritten:
a) Bereitstellen (101) einer durch die Blockchiffre (F) und den Nutzschlüssel (K₀) festgelegten Nutz-Permutation (F(K₀)),
b) Bereitstellen (102) einer Anzahl N von Dummy-Permutationen (G(K₁),..., (G(Kₙ)), welche durch N Dummy-Schlüssel (K₁,...,Kₙ) und die Blockchiffre (F) oder die Inverse (F⁻¹) der Blockchiffre (F) festgelegt sind, und
c) Verketten (103) der Nutz-Permutation (F(K₀)) und der Dummy-Permutationen (G(K₁),...,(G(Kₙ)) zu einer Verkettung (H) derart, dass die Verkettung (H) und die Nutz-Permutation (F(K₀)) eine gleiche Abbildung ergeben.

2. Verfahren nach Anspruch 1,
**dadurch gekennzeichnet,**
**dass** die Anzahl N der Dummy-Permutationen (G(K₁),...,(G(Kₙ)) derart bereitgestellt wird, dass jede Verkettung der N Dummy-Permutationen (G(K₁),...,G(Kₙ)) eine Urbildmenge (M) der Blockchiffre (F) ergibt.

3. Verfahren nach Anspruch 2,
**dadurch gekennzeichnet,**
**dass** die Verkettung der N Dummy-Permutationen durch eine erste Bauform mit (g₁ o g₁⁻¹) o (g₂ o g₂⁻¹) o ... o (gₙ o gₙ⁻¹) realisiert wird, mit gᵢ = G(Kᵢ), wobei G die Blockchiffre (F) oder die Inverse (F⁻¹) der Blockchiffre bezeichnet und wobei Kᵢ, mit i ∈ [1, ..., n], die N Dummy-Schlüssel (K₁,...,Kₙ) bezeichnen.

4. Verfahren nach Anspruch 2,
**dadurch gekennzeichnet,**
**dass** die Verkettung der N Dummy-Permutationen durch eine zweite Bauform mit (g₁ o g₂ o ... o gₙ) o (gₙ⁻¹ o ... o g₂⁻¹ o g₁⁻¹) realisiert wird, mit gᵢ = G(Kᵢ), wobei G die Blockchiffre (F) oder die Inverse (F⁻¹) der Blockchiffre bezeichnet und wobei Kᵢ, mit i ∈ [1, ..., n], die N Dummy-Schlüssel (K₁,...,Kₙ) bezeichnen.

5. Verfahren nach Anspruch 2,
**dadurch gekennzeichnet,**
**dass** die Verkettung der N Dummy-Permutationen durch eine dritte Bauform mit (g₁ o g₂ o g₃⁻¹) o (g₃ o g₂⁻¹ o g₁⁻¹) o (g₄ o g₅ o g₆⁻¹) o (g₆ o g₅⁻¹ o g₄⁻¹) o ... realisiert wird, mit gᵢ = G (Kᵢ), wobei G die Blockchiffre (F) oder die Inverse (F⁻¹) der Blockchiffre bezeichnet und wobei Kᵢ, mit i ∈ [1, ..., n], die N Dummy-Schlüssel (K₁,...,Kₙ) bezeichnen.

6. Verfahren nach Anspruch 5,
**dadurch gekennzeichnet,**
**dass** eine Implementierung einer Triple-DES-Verschlüsselung mittels der dritten Bauform abgesichert wird.

7. Verfahren nach einem der Ansprüche 1 bis 6,
**dadurch gekennzeichnet,**
**dass** die N Dummy-Schlüssel (K₁, ..., Kₙ) vor einem jeden Anwenden der Schritte a) bis c) permutiert werden.

8. Verfahren nach einem der Ansprüche 1 bis 6,
**dadurch gekennzeichnet,**
**dass** die N Dummy-Schlüssel (K₁, ..., Kₙ) vor einem jeden Anwenden der Schritte a) bis c) neu gebildet werden.

9. Verfahren nach einem der Ansprüche 1 bis 8,
**dadurch gekennzeichnet,**
**dass** der Nutzschlüssel (K₀) der Blockchiffre (F) fest zugeordnet wird.

10. Computerprogrammprodukt, welches auf einer programmgesteuerten Einrichtung die Durchführung eines Verfahrens nach einem der Ansprüche 1 bis 9 veranlasst.

11. Vorrichtung (200) zum Absichern einer mit einem Nutzschlüssel (K₀) verschlüsselten Blockchiffre (F) gegen Template-Attacken, mit:
einem ersten Mittel (201) zum Bereitstellen einer durch die Blockchiffre (F) und den Nutzschlüssel (K₀) festgelegten Nutz-Permutation (F(K₀)),
einem zweiten Mittel (202) zum Bereitstellen einer Anzahl N von Dummy-Permutationen (G(K₁),..., G(Kₙ)), welche durch N Dummy-Schlüssel (K₁, ..., Kₙ) und die Blockchiffre (F) oder die Inverse (F⁻¹) der Blockchiffre (F) festgelegt sind, und
einem dritten Mittel (203) zum Verketten der Nutz-Permutation (F(K₀)) und der Dummy-Permutationen (G(K₁),...,G(Kₙ)) zu einer Verkettung (H) derart, dass die Verkettung (H) und die Nutz-Permutation (F(K₀)) eine gleiche Abbildung ergeben.

12. Prozessor (300) mit einer Vorrichtung (200) nach Anspruch 11.

## Claims

1. Method for securing a block cipher (F), encrypted with a working key (K₀), against template attacks, comprising the following steps:
a) providing (101) a working permutation (F(K₀)) fixed by the block cipher (F) and the working key (K₀),
b) providing (102) a number N of dummy permutations (G(K₁),..., (G(Kn)), which are fixed by N dummy keys (K₁,...,Kₙ) and the block cipher (F) or the inverse (F⁻¹) of the block cipher (F), and
c) chaining (103) the working permutation (F(K₀)) and the dummy permutations (G(K₁),..., (G(Kₙ)) to form a chain (H) in such a way that the chain (H) and the working permutation (F(K₀)) produce an identical image.

2. Method according to claim 1,
**characterised in that**
the number N of dummy permutations (G(K₁),..., (G(Kₙ)) is provided in such a way that each chain of N dummy permutations (G(K₁),...,G(Kₙ)) produces a pre-image set (M) of the block cipher (F).

3. Method according to claim 2,
**characterised in that**
the chain of N dummy permutations is achieved by a first model having (g₁ o g₁⁻¹) o (g₂ o g₂⁻¹) o ... o (gₙ o gₙ⁻¹), where gᵢ = G(Kᵢ), wherein G designates the block cipher (F) or the inverse (F⁻¹) of the block cipher and wherein Kᵢ, where i ∈ [1, ..., n], designates the N dummy keys (K₁,...,Kₙ).

4. Method according to claim 2,
**characterised in that**
the chain of N dummy permutations is achieved by a second model having (g₁ o g₂ o ... o gₙ) o (gₙ⁻¹ o ... o g₂⁻¹ o g₁⁻¹), where gᵢ = G(Kᵢ), wherein G designates the block cipher (F) or the inverse (F⁻¹) of the block cipher and wherein Kᵢ, where i ∈ [1, ..., n], designates the N dummy keys (K₁,...,Kₙ).

5. Method according to claim 2,
**characterised in that**
the chain of N dummy permutations is achieved by a third model having (g₁ o g₂ o g₃⁻¹) o (g₃ o g₂⁻¹ o g₁⁻¹) o (g₄ o g₅ o g₆⁻¹) o (g₆ o g₅⁻¹ o g₄⁻¹) o ..., where gᵢ = G (Kᵢ), wherein G designates the block cipher (F) or the inverse (F⁻¹) of the block cipher and wherein Kᵢ, where i ∈ [1, ..., n], designates the N dummy keys (K₁,...,Kₙ).

6. Method according to claim 5,
**characterised in that**
an implementation of a triple DES encryption is secured by means of the third model.

7. Method according to one of claims 1 to 6,
**characterised in that**
the N dummy keys (K₁, ..., Kₙ) are permutated before each application of steps a) to c).

8. Method according to one of claims 1 to 6,
**characterised in that**
the N dummy keys (K₁, ..., Kₙ) are re-formed before each application of steps a) to c).

9. Method according to one of claims 1 to 8,
**characterised in that**
the working key (K₀ is permanently allocated to the block cipher (F).

10. Computer program product, which causes a method according to one of claims 1 to 9 to be carried out on a program-controlled device.

11. Device (200) for securing a block cipher (F), encrypted with a working key (K₀, against template attacks, comprising:
a first means (201) for providing a working permutation (F(K₀) fixed by the block cipher (F) and the working key (K₀),
a second means (202) for providing a number N of dummy permutations (G(K₁),...,), G(Kₙ)), which are fixed by N dummy keys (K₁, ..., Kₙ) and the block cipher (F) or the inverse (F⁻¹) of the block cipher (F), and
a third means (203) for chaining the working permutation (F(K₀)) and the dummy permutations (G(K₁),...,G(Kₙ)) to form a chain (H) in such a way that the chain (H) and the working permutation (F(K₀)) produce an identical image.

12. Processor (300) having a device (200) according to claim 11.

## Revendications

1. Procédé de sécurisation d'un chiffrement par blocs (F) codé avec une clé effective (K₀) contre des attaques par templates, comprenant les étapes consistant à :
a) préparer (101) une permutation effective (F(K₀)) déterminée par le chiffrement par blocs (F) et la clé effective (K₀),
b) préparer (102) un nombre N de permutations factices (G (K₁), ..., (G(Kₙ)) qui sont déterminées par N clés factices (K₁, ..., Kₙ) et le chiffrement par blocs (F) ou l'inverse (F⁻¹) du chiffrement par blocs (F), et
c) concaténer (103) la permutation effective (F(K₀)) et les permutations factices (G(K₁), ..., (G(Kₙ)) en une concaténation (H) de telle manière que la concaténation (H) et la permutation effective (F(K₀)) fournissent une même représentation.

2. Procédé selon la revendication 1, **caractérisé en ce que** le nombre N des permutations factices (G(K₁), ..., (G(Kₙ)) est préparé de telle manière que chaque concaténation des N permutations factices (G(K₁), ..., (G(Kₙ)) fournisse un ensemble (M) de l'image réciproque du chiffrement par blocs (F).

3. Procédé selon la revendication 2, **caractérisé en ce que** la concaténation des N permutations factices est réalisée par une première configuration avec (g₁ o g₁⁻¹) o (g₂ o g₂⁻¹) o ... o (gₙ o gₙ⁻¹), avec gᵢ = G(Kᵢ), dans laquelle G représente le chiffrement par blocs (F) ou l'inverse (F⁻¹) du chiffrement par blocs, et dans laquelle les Kᵢ, avec i ∈ [1, ..., n], représentent les N clés factices (K₁, ..., Kₙ).

4. Procédé selon la revendication 2, **caractérisé en ce que** la concaténation des N permutations factices est réalisée par une deuxième configuration avec (g₁ o g₂ o ... o gₙ) o (gₙ⁻¹ o ... g₂⁻¹ o g₁⁻¹), avec gᵢ = G(Kᵢ), dans laquelle G représente le chiffrement par blocs (F) ou l'inverse (F⁻¹) du chiffrement par blocs, et dans laquelle les Kᵢ, avec i ∈ [1, ..., n], représentent les N clés factices (K₁, ..., Kₙ).

5. Procédé selon la revendication 2, **caractérisé en ce que** la concaténation des N permutations factices est réalisée par une troisième configuration avec (g₁ o g₂ o g₃⁻¹) o (g₃ o g₂⁻¹ o g₁⁻¹) o (g₄ o g₅ o g₆⁻¹) o (g₆ o g₅⁻¹ o g₄⁻¹) o ..., avec gᵢ = G(Kᵢ), dans laquelle G représente le chiffrement par blocs (F) ou l'inverse (F⁻¹) du chiffrement par blocs, et dans laquelle les Kᵢ, avec i ∈ [1, ..., n], représentent les N clés factices (K₁, ..., Kₙ).

6. Procédé selon la revendication 5, **caractérisé en ce que** l'on assure une implémentation d'un triple codage DES au moyen de la troisième configuration.

7. Procédé selon l'une des revendications 1 à 6, **caractérisé en ce que** les N clés factices (K₁, ..., Kₙ) sont permutées avant l'une de chacune des utilisations des étapes a) à c).

8. Procédé selon l'une des revendications 1 à 6, **caractérisé en ce que** les N clés factices (K₁, ..., Kₙ) sont à nouveau constituées avant l'une de chacune des utilisations des étapes a) à c).

9. Procédé selon l'une des revendications 1 à 8, **caractérisé en ce que** la clé effective (K₀) est assujettie au chiffrement par blocs (F).

10. Produit de programme informatique qui assure la mise en oeuvre d'un procédé selon l'une des revendications 1 à 9 à partir d'une unité commandée par un programme.

11. Dispositif (200) de sécurisation d'un chiffrement par blocs (F) codé avec une clé effective (K₀) contre des attaques par templates, comprenant :
un premier moyen (201) pour préparer une permutation effective (F(K₀)) déterminée par le chiffrement par blocs (F) et la clé effective (K₀),
un deuxième moyen (202) pour préparer un nombre N de permutations factices (G(K₁), ..., (G(Kₙ)) qui sont déterminées par N clés factices (K₁, ..., Kₙ) et le chiffrement par blocs (F) ou l'inverse (F⁻¹) du chiffrement par blocs (F), et
un troisième moyen (203) pour concaténer la permutation effective (F(K₀)) et les permutations factices (G(K₁), ...,
(G(Kₙ)) en une concaténation (H) de telle manière que la concaténation (H) et la permutation effective (F(K₀)) fournissent une même représentation.

12. Processeur (300) comprenant un dispositif (200) selon la revendication 11.
